Europäisches Patentamt

European Patent Office

Office européen des brevets

(11) Publication number: **0 166 205**
**B1**

(12) EUROPEAN PATENT SPECIFICATION

(45) Date of publication of patent specification: **09.08.89**

(21) Application number: **85106299.2**

(22) Date of filing: **22.05.85**

(51) Int. Cl.⁴: **H 01 G 9/05**

(54) Method of producing electrolytic capacitor with Al-Ti anode body.

(30) Priority: **22.05.84 JP 102880/84**

(43) Date of publication of application:
**02.01.86 Bulletin 86/01**

(45) Publication of the grant of the patent:
**09.08.89 Bulletin 89/32**

(84) Designated Contracting States:
**DE FR GB**

(56) References cited:
**DE-A-2 700 224**
**GB-A-1 082 390**
**GB-A-2 076 859**
**US-A-3 466 230**

(73) Proprietor: **NEC CORPORATION**
**33-1, Shiba 5-chome, Minato-ku**
**Tokyo 108 (JP)**

(72) Inventor: **Shimizu, Shigeaki**
**c/o NEC CORPORATION 33-1, Shiba 5-chome**
**Minato-Ku Tokyo (JP)**
Inventor: **Arai, Yoshio**
**c/o NEC CORPORATION 33-1, Shiba 5-chome**
**Minato-Ku Tokyo (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

# EP 0 166 205 B1

**Description**

The present invention relates to a method of producing an Al-Ti alloy solid electrolytic capacitor comprising the steps of forming a porous Al-Ti alloy anode body and anodizing the Al-Ti alloy body, thereby forming an oxide layer onto said Al-Ti alloy body.

A prior art method of this kind has been known from GB—A—2 076 859.

A porous sintered body for an electrolytic capacitor using an aluminium-titanium alloy as the anode material is also disclosed in US—A—4 331 477. A porous Al-Ti alloy body can be obtained by the following steps, for example. First, aluminium and either titanium or titanium hydride $(T_1H_2)$ in the form of powder in the micron order are sufficiently mixed. The mixed powder is then press-moulded with lead wire embedded in it. The mold is sintered at a vacuum of $1 \times 10^{-6}$ mmHg at a temperature of 1.000 to 1.100°C for 1 to 3 hours, to obtain an alloy porous sintered body. Al-Ti alloy reaction occurs during sintering and aluminium is exclusively diffused into and absorbed by titanium, so that the portions where aluminium has been previously present become and remain porous, thereby providing the alloy porous body. The method of providing an electrolytic capacitor with Al-Ti alloy anode is disclosed in US—A—4 517 727.

The Al-Ti alloy having excellent capacitor characteristics has also the characterizing feature that a porous body having a large specific surface area can be obtained easily.

In order to make a solid electrolytic capacitor, the Al-Ti alloy is subjected to an anodic oxidation to form an oxide film by using an aqueous solution of phosphoric acid. Thereafter, a manganese dioxide $(MnO_2)$ layer is formed by thermal decomposition of manganese nitrate and then graphite and silver-paste layers are formed on the $MnO_2$ layer which are essentially the same as the process used for conventional Ta capacitors.

The temperature of the heat treatment of the thermal decomposition of the manganese nitrate generally ranges between 200°C and 250°C. At such a high temperature, the oxide film is thermally deteriorated.

It was found that the oxide film was deteriorated much more remarkably on the thermal decomposition of manganese nitrate than it deteriorated in the case of a Ta capacitor. It is thought that this deterioration occurs because both Ti and Al essentially are more chemically active than Ta.

When the oxide film is thermally deteriorated, dielectric characteristics such as dielectric loss and temperature coefficient of the electrostatic capacitance are increased.

An object of the invention is to provide a method of producing an Al-Ti alloy solid electrolytic capacitor of the aforementioned kind which is capable of remarkably reducing the dielectric loss of the anodic oxide film and the temperature coefficient of the electrostatic capacitance.

According to the present invention, this object is solved in that the aforementioned method further comprises the step of heating the anodized Al-Ti alloy body in an oxygen atmosphere at a temperature of 500°C to 700°C after said anodizing step.

The content of oxygen gas in the atmosphere used is favourably within 0,1 to 100 volume % and the heat treatment is favourably conducted for a time period of 30 minutes to 3 hours.

Brief description of the drawings:

Fig. 1, 2 and 3 are graphs showing temperature characteristics of electrostatic capacitances of solid samples measured at 120 Hz.

Fig. 4A shows a characteristic curve of electrostatic capacitances (at 120 Hz) of solid samples obtained at oxidation voltage of 40 volts by changing heat-treated temperature.

Fig. 4B shows a characteristic curve of dielectric loss of solid samples obtained at oxidation voltage of 40 volts by changing heat-treated temperature.

Detailed description of the preferred embodiments:

Powders of titanium hydride and aluminium having a mean particle size of 3 µm were mixed with each other at the Al content by 54 atom % and Ti content of 46 atom %, and the mixture was press-molted into a cylindrical form. The press-molted cylinder of the powder mixture was then fixed and sintered by being held in a vacuum atmosphere for 2 hours at 1070°C, thus forming porous anode bodies of Al-Ti alloy. The Al-Ti alloy had a diameter of about 2,5 mm and a height of 2 mm.

The porous Al-Ti alloy anode bodies were subjected to anodic oxidation conducted in a 0,1 vol % of phosphoric acid, at varying formation voltages of 40 V, 60 V, 80 V, 100 V and 120 V, thus preparing five kinds of samples. These samples were then subjected to a heat treatment which was conducted for one hour at varying temperatures shown in "heat-treatment after anodic oxidation" in table 1.

Measurement of dielectric loss (tan $\delta_f$) of the anodic oxide film at 120 Hz was conducted for the samples of no heat treatment and the samples subjected to heat treatment in the atmospheric air, the result of which is shown in "tan $\delta_f$ (before solid treatment)" in table 1. In each case, 20 pieces of samples were used and the mean values are shown in table 1. The measurement was conducted in a 30 vol % sulfuric acid. The electrostatic capacitances (at 120 Hz) were almost the same as those samples of no heat-treatment. More specifically, electrostatic capacitances of about 12,6 µF, 8,3 µF, 6,2 µF, 4,9 µF and 4,1 µF were confirmed for the samples prepared at the anodic oxidation voltages of 40 V, 60 V, 80 V, 100 V and 120 V, respectively.

## Table 1

| formation voltage ($V_f$) | heat-treatment after anodic oxidation | $\tan\delta_f$ (%) (before solid treatment) | $\tan\delta_f$ (%) (after solid treatment) | $\tan\delta_{120}$ (%) (after solid treatment) |
|---|---|---|---|---|
| 40 | none | 1,4 | 1,8 | 3,2 |
| | 550°C 1Hr. | 0,3 | 0,3 | 1,7 |
| 60 | none | 1,3 | 1,9 | 2,9 |
| | 575°C 1Hr. | 0,25 | 0,25 | 1,5 |
| 80 | none | 1,2 | 1,6 | 2,7 |
| | 600°C 1Hr. | 0,2 | 0,2 | 1,3 |
| 100 | none | 1,1 | 1,5 | 2,5 |
| | 620°C 1Hr. | 0,25 | 0,25 | 1,3 |
| 120 | none | 1,2 | 1,5 | 2,4 |
| | 630°C 1Hr. | 0,35 | 0,35 | 1,2 |

As will be clearly seen from table 1, it will be seen that each of the samples the dielectric loss ($\tan\delta_f$) of the oxide film as measured after the treatment in the atmospheric air was 0,2 to 0,35 %, which is much smaller than 1,1 to 1,4 % observed in the samples of no heat treatment.

All the ten samples shown in table 1 were subjected to a process for forming a cathode of manganese dioxide through thermal decomposition of manganese nitrate, and were formed into solid by a resin dip following soldering by graphite and silver paste.

The dielectric loss (at 120 Hz) of the capacitor as a whole, including the ESR (Equivalent Series Resistance) of cathode resistance such as of $MnO_2$ and the dielectric loss ($\tan\delta_f$) of the oxide film was measured for each sample, the result of which is shown in the right column in table 1.

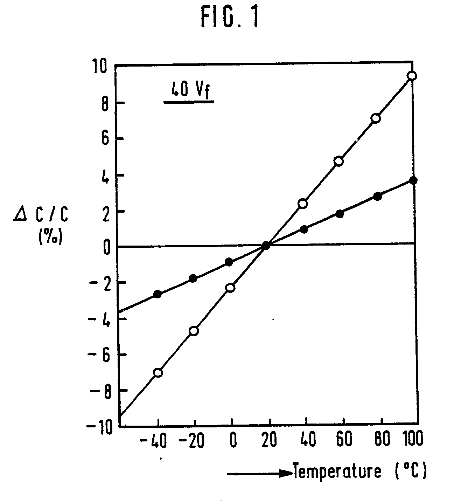

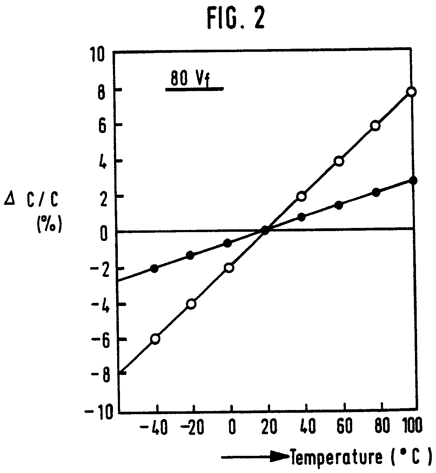

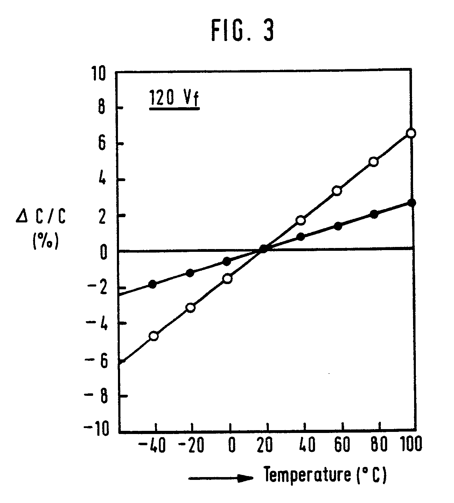

Temperature characteristics of the electrostatic capacitance (at 120 Hz) were measured for the solid samples obtained at oxidation voltages 40 $V_f$, 80 $V_f$ and 120 $V_f$, within the temperature range of between −50°C and +100°C, the results of which are shown in figs. 1, 2 and 3. In these figures, each ordinate axis shows the capacitance changing ratio normalized by the capacitance at 20°C, while each abscissa axis shows temperature. The curve plotting the white blank circles show the characteristics as obtained with the solid samples formed directly after the anodic oxidation without heat treatment, while the curve plotting black solid circles show the characteristics so obtained with the solid samples formed after the heat treatment at high temperature.

As will be understood from table 1, the solid samples formed directly after the anodic oxidation, which inherently showed initial value of $\tan\delta_f$ greater than those exhibited by the samples subjected to the heat treatment at high temperature, exhibited a further increase in the $\tan\delta_f$ value, whereas the solid samples obtained after the heat treatment maintained the initial small value of $\tan\delta_f$ obtained before solidification. The temperature at which the manganese nitrate is thermally decomposed in the course of the solidification generally ranges between 200°C and 250°C. At such a high temperature, the oxide film formed through anodic oxidation which is basically a low-temperature process is thermally degraded but the oxide film once treated at high temperature does not exhibit any substantial degradation. The solid sample formed after the heat treatment also showed smaller total value of $\tan\delta_f$ (at 120 Hz) as the capacitor as a whole, corresponding to the small value of $\tan\delta_f$.

Referring now to the temperature characteristics of the electrostatic capacitance, as will be seen from figs. 1—3, the solid samples formed after the heat treatment at high temperature (curve plotting black solid circles) exhibit capacitance changing rate which is less than $\frac{1}{2}$ of that obtained with the solid samples formed directly after the anodic oxidation (curve plotting white blank circles), over the entire range of measuring temperature, thus proving a remarkable improvement. A greater improving effect is obtained as the oxidation voltage gets lower.

In the described embodiment, the heat treatment is conducted in the atmospheric air containing 21 vol. % of oxygen. It is confirmed that when the amount of oxygen in the treating atmosphere is less than 0,1 vol. %, no improvement in the dielectric characteristics is observed. By increasing the oxygen rate, the treating time is somewhat reduced. As a whole, a substantially equivalent effect is obtained if the treating atmosphere contains about 0,1 to 100 vol. % oxygen.

The optimum treating temperature varies depending on the oxidation voltage. As will be seen from table 1, the temperature at which the value of $\tan\delta_f$ is reduced is shifted to the higher side as the oxidation voltage gets higher, i.e., as the thickness of the oxide film gets large.

In the foregoing, the description has been made on the variation of the dielectrice characteristics only as to restricted condition of heat treatment so as to effectively show the effect of the present invention.

In the following, more specific reason of the improvement of dielectric characteristics, which is peculiar to Al-Ti alloy, will be described.

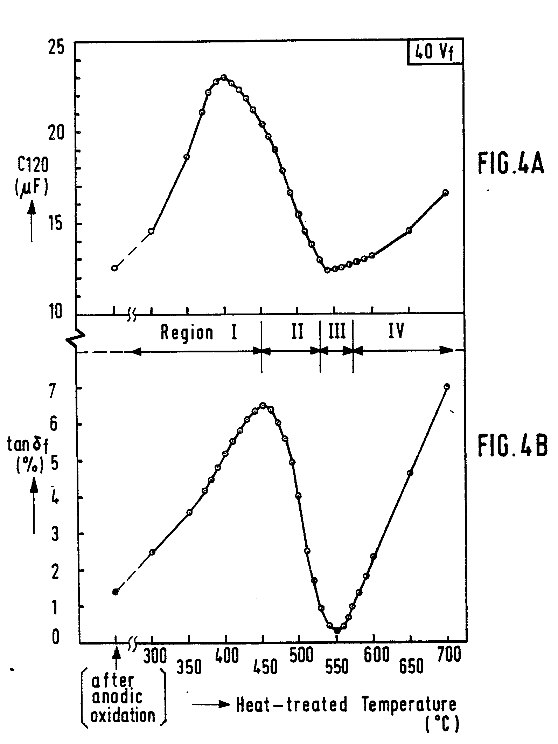

In Fig. 4, the variation of the dielectric characteristics is shown by subjecting Al-Ti alloy samples to heat treatment in the temperature range of 300°C to 700°C for one hour after anodic oxidation with 40 volts. Each abscissa axis shows temperature while ordinate axis of fig. 4A shows an electrostatic capacitance and the ordinate axis of fig. 4B shows a dielectric loss.

The variation of the dielectric characteristics against the temperature of the heat treatment can be divided into four regions I to IV. In the region I, the dielectric loss increases monotonously according to the increase of the temperature. In fig. 4B, the region I corresponds to the temperature range of up to about 450°C.

In region II, tan $\delta_f$ decreases from peak value to the level of conventional where no heat treatment is carried out. In Fig. 4B, the region II corresponds to the temperature range of approximately 450°C to 550°C.

The region II shows the temperature range where the dielectric loss is lower than the conventional untreated one. In fig. 4B, the region III resides in the range of approximately 530°C to 570°C. In the region III, the dielectric loss has minimum value at 550°C and then increase again.

The region IV shows that the dielectric loss increase monotonously from the level of conventional one. In fig. 4B, the region IV corresponds to the temperature range beyond about 570°C.

When the anodic oxidation film is heated, the oxygen in the oxide film is taken by the base metal (Al-Ti alloy) and a donor level due to absence of oxygen is formed in the portion of the oxide film near the boundary between the oxide film and the base metal to form a semiconductive layer. In consequence, a portion of the oxide film containing the boundary becomes conductive and, therefore, the effective thickness of the oxide film as the insulator is reduced and thereby increasing the tan $\delta_f$ value, as well as the electrostatic capacitance $C_{120}$. In the region I, the oxide film is thermally degraded and its degrading tendency becomes greater as the temperature gets higher as shown in fig. 4B.

When the temperature exceeds 450°C, the diffusion of the oxygen from the surface of the oxide film becomes active. Accordingly, oxygen defect caused by the base metal is recovered by the activated oxygen diffusion, and $C_{120}$ and tan $\delta_f$ are reduced as shown in the region II in fig. 4A and 4B.

And then, at predetermined range of the temperature, a definite balance or equilibrium state is obtained between the oxygen taken into the base metal and diffused oxygen from the oxide film surface. As a result, the oxide film has a better condition than that of not treated oxide film and thereby the very small value of tan $\delta_f$ is obtained as shown in the region III of fig. 4B. The $C_{120}$ is returned to the initial value as shown in fig. 4B.

By further increasing the temperature, the balance of the oxygen flows is deteriorated and the value of $C_{120}$ and tan $\delta_f$ is again increased as shown in the region IV.

As is apparent from the foregoing, the variation of both of tan $\delta_f$ and $C_{120}$ are once deteriorated, and again reduced after passing maximum value, and in the region III, the minimum dielectric loss is obtained. The similar characteristic curves are observed in other samples obtained by other anodization voltages by shifting the peak values. In table 1, each temperature of the heat treatment for samples corresponds to the minimum value of tan $\delta_f$ within the region III. From table 1, it is apparent that when the anodization voltages becomes larger, a desirable temperature to obtain the minimum dielectric loss is shifted toward higher temperature. The reason may be assumed as follows. If the thickness of the oxide layer becomes large and thus it requires higher temperature to cause the diffusion effect from the surface of the oxide film so as to reach the boundary portion.

The smaller value of tan $\delta_f$ corresponds to the smaller value of the electrostatic capacitance temperature coefficient. Thus the minimum condition of tan $\delta_f$ in the region III corresponds to the needed condition of reduction and improvement of the above mentioned temperature coefficient as shown in fig. 1 to fig. 3. In fact, when the heat treatment is done in the regions I and II, the electrostatic capacitance temperature coefficient of the capacitor obtained by solidification shows a larger value than that of the capacitor which is obtained by solidification without heat treatment shown in fig. 1 to fig. 3 as plotted in white blank circles. For example, it is about twice the value of such white blank circle data of samples subjected to the heat treatment of 350°C or one hour. That is, improvement effect according to the present invention cannot be obtained in the region I and II, rather results in the deteriorating of the dielectric characteristics.

Accordingly, in order to obtain the excellent improvement effect of the dielectric characteristics, the condition of the heat treatment must reside in the region III where the minimum value of tan $\delta_f$ appears in each of suitable anodization voltages. In other words, the mere heat treatment in oxygen atmosphere cannot give the effect of the present invention.

In general, the oxidation voltage used in the production of electrolytic capacitance ranges between 30 volts and 150 volts in most cases. With such an anodic oxidation voltages, appreciable effects of the reduction in the tan $\delta_f$ value and the electrostatic capacitance temperature coefficient can be obtained by selecting the region III in heat treating temperature characteristics. According to experiments, when the anodic oxidation voltage is selected in the range of 30 to 150 volts, the region III of the heat treatment corresponds to the temperature range of 500°C to 700°C. An optimum temperature varies depending upon the anodic oxidation voltage, and a higher temperature in the range of 500°C to 700°C is favourable for the higher anodic oxidation voltage in the range of 30 to 150 volts and the optimum condition is determined to obtain a minimum value of the dielectric loss. A heat treatment time ranges from 30 minutes to 3 hours depending upon the temperature. Under a higher temperature in the range of 500°C to 700°C, a heat treatment time may be shorter in the range of 0,5 to 3 hours. In a conventional Ta solid electrolytic capacitor, there is no region corresponding to the regions II and III. As a matter of fact, Ta anode body would burn it if was heated at 500°C or more in the oxygen atmosphere. Accordingly, the existence of the regions II and III is peculiar to Al-Ti alloy.

With regard to the composition of Al-Ti alloy, it is desirable for the aluminium to be in a range of 50 to 70 atom %. This Al atom % range is effective for obtaining a high electrostatic capacity per unit volume. In view of a leakage current and dielectric loss, a porous body made of 54 to 60 atom % of aluminium compositions are favourable as a capacitor anode. The optimum composition to manufacture the Al-Ti solid electrolytic capacitors is to be about 54 to 55 atom % of aluminium. The experiments showed that the composition of Al-Ti did not affect the characteristic curve of the dielectric loss against the heat treatment temperature.

As will be understood from the foregoing description of the embodiment, according to the production method of the invention, it is possible to remarkably decrease the electrostatic capacitance temperature coefficient, as well as dielectric loss of anodic oxide film, in an electrolytic capacitor having an anode body made of an Al-Ti porous alloy, whereby a remarkable improvement in the dielectric characteristics is attained, thus providing high utility and practicality of the invention.

**Claims**

1. A method of producing an Al-Ti alloy solid electrolytic capacitor comprising the steps of forming a porous Al-Ti alloy body and anodizing the Al-Ti alloy body, thereby forming an oxide layer onto said Al-Ti alloy body, characterized in that said method further comprises a step of heating the anodized Al-Ti alloy body in an oxygen atmosphere at a temperature of 500°C to 700°C after said anodizing step.

2. A method of producing an Al-Ti alloy solid electrolytic capacitor as claimed in claim 1, in which said oxygen atmosphere is air.

3. A method of producing an Al-Ti alloy solid electrolytic capacitor as claimed in claim 1, in which said anodizing voltages ranges from 30 volts to 150 volts, and the temperature of said heating in the oxygen atmosphere is selected such that the dielectric loss of the heated oxide layer becomes lower than the initial dielectric loss of said oxide layer prior to said heat treatment.

4. A method of producing an Al-Ti alloy solid electrolytic capacitor comprising steps of mixing aluminium powder and either titanium powder or titanium hydride powder, press-molding the mixture of said powders into a body, heating the resulting press-molded article thereby converting said body into a porous Al-Ti alloy body, anodizing the Al-Ti alloy body at a predetermined voltage thereby forming an oxide layer onto said porous Al-Ti alloy body, forming a manganese dioxide layer onto said oxide layer, and forming a cathode electrode layer onto said manganese dioxide layer, characterized in that said method further comprises a step of heating the Al-Ti alloy body, after said step of forming an oxide layer onto said porous Al-Ti alloy body, in an atmosphere containing 0,1 vol. % or more of oxygen at a temperature of 500°C to 700°C, with said predetermined voltage being set within the range of 30 volts to 150 volts.

**Patentansprüche**

1. Verfahren zur Herstellung eines Al-Ti legierten massiven Elektrolytkondensators mit den Schritten des Ausbildens eines porösen Al-Ti Legierungskörpers und Anodisierens des Al-Ti Legierungskörpers, dadurch eine Oxidschicht auf den Al-Ti Legierungskörper ausbildend, dadurch gekennzeichnet, daß das Verfahren ferner einen Schritt des Erhitzens des anodisierten Al-Ti Legierungskörpers in einer sauerstoffhaltigen Atmosphäre bei einer Temperatur von 500°C bis 700°C nach dem Anodisierungsschritt umfaßt.

2. Verfahren zur Herstellung eines Al-Ti legierten massiven Elektrolytkondensators nach Anspruch 1, in welchem die sauerstoffhaltige Atmosphäre Luft ist.

3. Verfahren zur Herstellung eines Al-Ti legierten massiven Elektrolytkondensators nach Anspruch 1, in welchem die Anodisierungsspannungen sich zwischen 30 und 150 Volt bewegen und die Temperatur des Erhitzens in den sauerstoffhaltigen Atmosphäre so ausgewählt ist, daß der dielektrische Verlust der aufgeheizten Oxidschicht geringer wird als der anfängliche dielektrische Verlust der Oxidschicht vor der Hitzebehandlung.

4. Verfahren zur Herstellung eines Al-Ti legierten massiven Elektrolytkondensators mit den Schritten des Mischens von Aluminiumpulver und entweder Titaniumpuder oder Titaniumhydridpuder, des Preßformens der Mischung der Puder in einen Körper, des Erhitzens des erhaltenen gepreßformten Gegenstandes, dabei den Körper in einen porösen Al-Ti legierten Körper umwandelnd, des Anodisierens des Al-Ti legierten Körpers bei einer vorbestimmten Spannung, dabei eine Oxidschicht auf dem porösen Al-Ti legierten Körper ausbildend, des Ausbildens einer Mangandioxidschicht auf der Oxidschicht und des Ausbildens einer kathodischen Elektrodenschicht auf der Mangandioxidschicht, dadurch gekennzeichnet, daß das Verfahren ferner umfaßt einen Schritt des Erhitzens des Al-Ti legierten Körpers, nach dem Schritt des Ausbildens einer Oxidschicht auf dem porösen Al-Ti legierten Körper in einer Atmosphäre, die 0,1 Volumenprozent oder mehr Sauerstoff bei einer Temperatur von 500°C bis 700°C enthält mit der vorbestimmten Spannung, die innerhalb des Bereichs von 30 bis 150 Volt eingestellt wird.

# EP 0 166 205 B1

**Revendications**

1. Procédé de fabrication d'un condensateur électrolytique solide en alliage Al-Ti comprenant les étapes consistant à former un corps poreux en alliage Al-Ti et à anodiser le corps en alliage Al-Ti, d'où la formation d'une couche d'oxyde sur le corps de l'alliage Al-Ti, caractérisé en ce que le procédé comprend en outre une étape consistant à chauffer le corps anodisé d'alliage Al-Ti sous atmosphère d'oxygène à une température de 500°C à 700°C après l'étape d'anodisation.

2. Procédé de fabrication d'un condensateur électrolytique solide en alliage Al-Ti selon la revendication 1, dans lequel l'atmosphère d'oxygène est l'air.

3. Procédé de fabrication d'un condensateur électrolytique solide en alliage Al-Ti selon la revendication 1, dans lequel la tension d'anodisation est comprise entre 30 volts et 150 volts, et la température du chauffage en atmosphère d'oxygène est choisie de façon que la perte diélectrique de la couche d'oxyde chauffée devienne inférieure à la perte diélectrique initiale de la couche d'oxyde avant le traitement thermique.

4. Procédé de fabrication d'un condensateur électrolytique solide en alliage Al-Ti comprenant les étapes consistant à mélanger de la poudre d'aluminium et soit de la poudre de titane soit de la poudre d'hydrure de titane, à mouler sous pression le mélange de poudres pour former un corps, à chauffer l'article moulé sous pression ainsi obtenu, d'où la transformation du corps en un corps poreux en alliage Al-Ti, à anodiser le corps en alliage Al-Ti à une tension prédéterminée, d'où la formation d'une couche d'oxyde sur le corps poreux en alliage Al-Ti, à former une couche de dioxyde de manganèse sur la couche d'oxyde, et à former une couche d'électrode de cathode sur la couche de dioxyde de manganèse, caractérisée en ce que le procédé comprend en outre une étape consistant à chauffer le corps en alliage Al-Ti, et après cette étape à former une couche d'oxyde sur le corps poreux en alliage Al-Ti dans une atmosphère contenant 0,1% en volume ou plus d'oxygène à une température comprise entre 500°C et 700°C, la tension prédéterminée étant réglée dans la plage comprise entre 30 volts et 150 volts.

6

# FIG. 1

## FIG. 2

## FIG. 3

FIG.4A

FIG.4B